(19) Europäisches Patentamt
European Patent Office
Office européen des brevets

(11) **EP 4 239 501 A1**

(12) **EUROPEAN PATENT APPLICATION**

(43) Date of publication:
**06.09.2023 Bulletin 2023/36**

(21) Application number: **22187448.0**

(22) Date of filing: **28.07.2022**

(51) International Patent Classification (IPC):
**G06F 17/11** (2006.01)

(52) Cooperative Patent Classification (CPC):
**G06F 17/11**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.03.2022 JP 2022033245**

(71) Applicant: **Kabushiki Kaisha Toshiba
Minato-ku
Tokyo (JP)**

(72) Inventors:
• **SAKAI, Yoshisato**
**Tokyo (JP)**
• **GOTO, Hayato**
**Tokyo (JP)**
• **KANAO, Taro**
**Tokyo (JP)**

(74) Representative: **Marks & Clerk LLP
15 Fetter Lane
London EC4A 1BW (GB)**

(54) **CALCULATION DEVICE, CALCULATION PROGRAM, RECORDING MEDIUM, AND CALCULATION METHOD**

(57) According to one embodiment, a calculation device includes a processing device configured to perform a processing procedure. The processing procedure includes a first update of a first vector, a second update of a second vector, and a third update of a third vector. The first update includes updating the first vector using the second vector and the third vector. The second update includes updating the second vector using the first vector. The processing device is configured to output an output of at least one of the first vector obtained after repeating the processing procedure or a function of the first vector obtained after the repeating the processing procedure.

FIG. 1

EP 4 239 501 A1

**EP 4 239 501 A1**

**Description**

<u>FIELD</u>

Embodiments described herein relate generally to a calculation device, a calculation program, a recording medium, and a calculation method.

<u>BACKGROUND</u>

Optimization problems etc. are solved by a calculation device.

<u>BRIEF DESCRIPTION OF THE DRAWINGS</u>

FIG. 1 is a schematic view illustrating a calculation device according to an embodiment;
FIG. 2 is a schematic view illustrating a part of the calculation device according to the embodiment;
FIG. 3 is a schematic view illustrating a calculation device according to the embodiment;
FIG. 4 is a schematic view illustrating a calculation device according to the embodiment;
FIG. 5 is a schematic view illustrating a calculation device according to the embodiment;
FIG. 6 is a schematic view illustrating a calculation device according to the embodiment;
FIG. 7 is a schematic view illustrating a calculation device according to the embodiment;
FIGS. 8A to 8D are graphs illustrating the operation of the calculation device according to the embodiment;
FIGS. 9A to 9D are graphs illustrating the operation of the calculation device according to the embodiment;
FIGS. 10A to 10E are graphs illustrating the operation of the calculation device according to the embodiment;
FIGS. 11A to 11D are graphs illustrating the operation of the calculation device according to the embodiment;
FIGS. 12A to 12D are graphs illustrating the operation of the calculation device according to the embodiment;
FIGS. 13A to 13E are graphs illustrating the operation of the calculation device according to the embodiment;
FIGS. 14A to 14D are graphs illustrating the operation of the calculation device according to the embodiment;
FIGS. 15A to 15D are graphs illustrating the operation of the calculation device according to the embodiment;
FIGS. 16A to 16E are graphs illustrating the operation of the calculation device according to the embodiment; and
FIG. 17 is a schematic view illustrating the operation of the calculation device according to the embodiment.

<u>DETAILED DESCRIPTION</u>

According to one embodiment, a calculation device includes a processing device configured to perform a processing procedure. The processing procedure includes a first update of a first vector, a second update of a second vector, and a third update of a third vector. The first update includes updating the first vector using the second vector and the third vector. The second update includes updating the second vector using the first vector. The processing device is configured to output an output of at least one of the first vector obtained after repeating the processing procedure or a function of the first vector obtained after the repeating the processing procedure. The output includes an ith entry of a value and a jth entry of a value. The i is an integer of not less than 1 and not more than $n$. The $n$ is an integer of not less than 2. The j is an integer of not less than 1 and not more than the $n$. The j is different from the i. The ith entry of the value is binary. The jth entry of the value of the is non-binary. A variable of the first vector includes an ith entry of a first variable $x_i$ and a jth entry of a first variable $x_j$. A variable of the second vector includes the ith entry of a second variable $y_i$ and the jth entry of a second variable $y_j$. The second update includes updating the ith entry of the second variable $y_i$ by adding a first function calculated from the ith entry of the first variable $x_i$ and a second function calculated from the ith entry of the first variable $x_i$ to the ith entry of the second variable $y_i$ before the update. The second update includes updating the jth entry of the second variable $y_j$ by adding the first function calculated from the jth entry of the first variable $x_j$ to the jth entry of the second variable $y_j$ before the update.

Various embodiments are described below with reference to the accompanying drawings.

In the specification and drawings, components similar to those described previously or illustrated in an antecedent drawing are marked with like reference numerals, and a detailed description is omitted as appropriate.

First embodiment

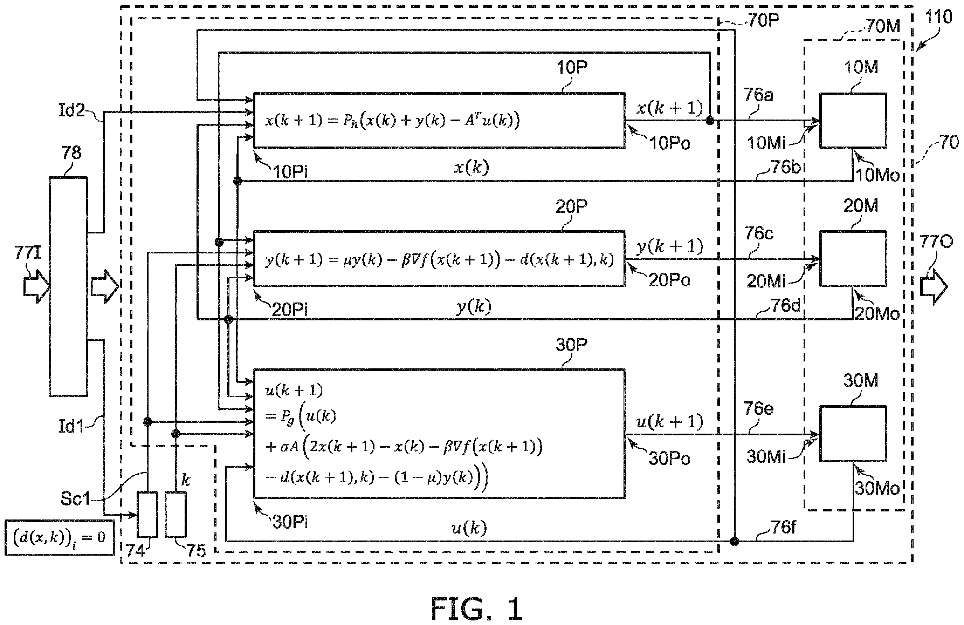

FIG. 1 is a schematic diagram illustrating a calculation device according to an embodiment.

As shown in FIG. 1, a calculation device 110 according to the embodiment includes a processing device 70.

The processing device 70 is configured to perform the processing procedure repeatedly.

The processing procedure includes a first update of a first vector, a second update of a second vector, and a third update of a third vector. The first vector corresponds to a first variable set {x}. The second vector corresponds to a second variable set {y}. The third vector corresponds to a third variable set {u}.

The first update includes updating the first vector using the second vector and the third vector. The second update includes updating the second vector using the first vector. For example, the second update may be performed without using the third vector.

The processing device 70 can output an output (output data 77O) of at least one of the first vector obtained after repeating the processing procedure and a function of the first vector obtained after repeating the processing procedure. The function of the first vector, for example, rounds elements of the first vector. In one example, if the elements of the first vector are not less than 1/2, the output of the function of the first vector is 1, and if the elements of the first vector are less than 1/2, the output of the function of the first vector is 0. In the embodiment, the function of the first vector can be modified in various ways.

As shown in FIG. 1, the calculation device 110 may include an acquisition part 78. The acquisition part 78 can acquire conditions (input information 771) and the like applied to the calculation. The output data 77O may be output to the outside via the acquisition part 78. In this case, the acquisition part 78 may be an input/output interface.

In the example shown in FIG. 1, the third update includes updating the third vector using the first vector and the second vector.

The calculation device 110 according to the embodiment can solve an optimization problem, for example. The optimization problem may include, for example, the Ising problem. For example, in the optimization problem, an objective function f (x) and multiple inequality constraints (or multiple equality constraints) are set. When this constraint is given, the first vector is obtained so that the value of the objective function f (x) becomes small.

The output being output from the processing device 70 includes multiple values. The multiple values include the first entry of a value to the nth entry of a value. "n" is an integer not less than 2. The output includes an ith entry of a value and an jth entry of a value. "i" is an integer not less than 1 and not more than n. "j" is an integer not less than 1 and not more than n. "j" is different from "i". In one example, the ith entry of the value is binary and the jth entry of the value is non-binary. The non-binary value is, for example, a continuous value. The non-binary value is, for example, a multi-value of not less than 3 values. In this way, some of the multiple values are output as binary values. Another part of the multiple values is output as a non-binary value.

The first vector and the second vector are n-dimensional. The first vector includes a variable set to $x_n$. The second vector includes a variable set $y_1$ to $y_n$. The variable of the first vector includes the ith entry of the first variable $x_i$ and the jth entry of the first variable $x_j$. The variable of the second vector includes the ith entry of the second variable $y_i$ and the jth entry of the second variable $y_j$.

In the embodiment, the update of the second vector corresponding to the binary output is different from the update of the second vector corresponding to the non-binary output.

For example, as an update regarding binary output, the following is performed. The second update includes updating the ith entry of the second variable $y_i$ by adding the first function calculated from the ith entry of the first variable $x_i$ and the second function calculated from the ith entry of the first variable $x_i$ to the ith entry of the second variable $y_i$ before the update.

For example, as an update regarding non-binary output, the following is performed. The second update includes updating the jth entry of the second variable $y_j$ by adding the first function calculated from the jth entry of the first variable $x_j$ to the jth entry of the second variable $y_j$ before the update.

As described above, in the embodiment, the optimization problem including the binary value and the non-binary value can be appropriately solved.

The third vector is m-dimensional. "m" is an integer of not less than 1. The variable of the third vector includes a qth entry of a third variable $u_q$. The variables of the third vector include a variable set $u_1$ to $u_q$. "m" is the number of inequality constraints set for the first vector.

In the embodiment, the optimization problem can be solved when the multiple inequality constraints (or the multiple equality constraints) are provided. For example, the optimization problem is solved at high speed.

As shown in FIG. 1, in this example, the processing device 70 includes a processor 70P and a memory part 70M. The processor 70P can perform the first update, the second update, and the third update. The memory part 70M can store the first vector, the second vector, and the third vector.

In this example, the processor 70P includes a first processing portion 10P, a second processing portion 20P, and a third processing portion 30P. The first processing portion 10P can perform the first update. The second processing portion 20P can perform the second update. The third processing portion 30P can perform the third update.

In this example, the memory part 70M includes a first memory portion 10M, a second memory portion 20M, and a third memory portion 30M. The first memory portion 10M can store the first vector. The second memory portion 20M can store the second vector. The third memory portion 30M can store the third vector.

Let "k" be the number of times repetition of the processing procedure. In this example, the processing device 70 includes a second controller 75. "k" may be supplied from the second controller 75 to the second processing portion 20P. "k" may be supplied from the second controller 75 to the third processing portion 30P.

In the example shown in FIG. 1, the first vector x *(k)* before update stored in the first memory portion 10M is supplied to the first processing portion 10P and the third processing portion 30P. The second vector y (k) before the update stored in the second memory portion 20M is supplied to the second processing portion 20P and the first processing portion 10P. The third vector *u (k)* before the update stored in the third memory portion 30M is supplied to the third processing portion 30P and the first processing portion 10P.

The updated first vector x *(k* + 1) output from the first processing portion 10P is supplied to the first memory portion 10M, the second processing portion 20P, and the third processing portion 30P. The updated second vector *y (k* + 1) output from the second processing portion 20P is supplied to the second memory portion 20M. The updated third vector *u (k* + 1) output from the third processing portion 30P is input to the third memory portion 30M.

By repeatedly performing the processing procedure including such an update, a solution can be obtained when there are constraints. For example, the solution can be obtained at high speed.

In the example shown in FIG. 1, the processing device may include the first to sixth signal paths 76a to 76f. A signal (for example, information) is transmitted / received between the processor 70P and the memory part 70M by these signal paths. The first processing portion 10P includes a first processing input part 10Pi and a first processing output part 10Po. The second processing portion 20P includes a second processing input part 20Pi and a second processing output part 20Po. The third processing portion 30P includes a third processing input part 30Pi and a third processing output part 30Po.

The first memory portion 10M includes a first memory input part 10Mi and a first memory output part 10Mo. The second memory portion 20M includes a second memory input part 20Mi and a second memory output part 20Mo. The third memory portion 30M includes a third memory input part 30Mi and a third memory output part 30Mo.

As shown in FIG. 1, the processing input part, the processing output part, the memory input part, and the memory output part are connected by the first to sixth signal paths 76a to 76f.

For example, these signal paths perform the update of the first vector, the update of the second vector, and the update of the third vector. By connecting by the sixth signal path 76f, the third vector is used to update the first vector.

First, an example of processing related to the value of the "ith entry" corresponding to the binary output will be described. In the first processing portion 10P, for example, the calculation of the following first equation is carried out.

$$x(k + 1) = P_h\big(x(k) + y(k) - A^T u(k)\big) \quad \cdots (1)$$

In the second processing portion 20P, for example, the calculation of the following second equation is carried out.

$$y(k + 1) = \mu y(k) - \beta \nabla f\big(x(k + 1)\big) - d(x(k + 1), k) \quad \cdots (2)$$

In the third processing portion 30P, for example, the calculation of the following third equation is carried out.

$$
\begin{aligned}
u(k + 1) \\
= P_g\Big(u(k) \\
+ \sigma A\Big(2x(k + 1) - x(k) - \beta \nabla f\big(x(k + 1)\big) \\
- d(x(k + 1), k) - (1 - \mu)y(k)\Big)\Big) \quad \cdots (3)
\end{aligned}
$$

In the above first equation, "$P_h$" is a function described later. "$P_h$" corresponds to, for example, a function relating to the first proximity operator. *"$A^T$"* is a transpose matrix of "matrix A".

In the above second equation, "$\mu$" corresponds to the coefficient for adjustment. The second term on the right side of the second equation is the first function. The first function corresponds to a gradient of *f (x (k* + 1)). "$\beta$" is a coefficient. The function *d (x (k* + 1), *k)* of the third term of the second equation is expressed by the following fourth equation. In the fourth equation, *p (k)* is a coefficient.

$$\left(d(x,k)\right)_i = \left(1 - p(k)\right)\left(x_i - \frac{1}{2}\right) \quad (i = 1, \dots, n) \quad \cdots (4)$$

In the above third equation, "$P_g$" is a function described later. "$P_g$" corresponds to, for example, a function relating to the second proximity action calculation. "σ" is a coefficient.

In this way, for example, in the update related to the binary output, the ith entry of the second variable $y_i$ is updated by adding the first function calculated from the ith entry of the first variable $x_i$ and the second function calculated from the ith entry of the first variable $x_i$ to the ith entry of the second variable $y_i$ before the update.

On the other hand, in the processing relating to the value of the "jth entry" corresponding to the non-binary output, the function *d (x (k + 1), k)* of the third term is deleted in the above second equation. That is, in the second update regarding the non-binary output, the jth entry of the second variable $y_j$ is updated by adding the first function calculated from the jth entry of the first variable $x_j$ to the jth entry of the second variable $y_j$ before the update.

In one example, the control regarding the difference between the processing related to the binary output and the processing related to the non-binary output may be equivalent to the control of whether or not the function *d (x (k + 1), k)* is set to 0. In one example, the processing device 70 may include a first controller 74 (see FIG. 1). The first controller 74 can set the value of the ith output as a binary value and the value of the jth output as a non-binary value based on the information Id1 regarding the calculation condition. In this case, the first controller 74 may control the above difference regarding the second update by setting the function *d (x (k + 1), k)* to 0.

In the embodiment, when the objective function f *(x)* and the multiple inequality constraints are given, the first vector such that the value of the objective function f *(x)* becomes smaller under the condition that all of the multiple inequalities are satisfied is desired. As described above, the first vector is n-dimensional. This process is expressed by the fifth equation. minimize f(x) subject to

$$a_q \le \sum_{i=1}^{n} A_{q,i} x_i \le b_q \quad (q = 1, \dots, m), \quad \cdots (5)$$

$x \in \{0,1\}^n$

In the fifth equation, "$a_q$" is an element of "vector a". "$b_q$" is an element of "vector b". "$A_{q,i}$" is an element of "matrix A".

The inequality in the fifth equation corresponds to the sixth equation.

$$a \le Ax \le b \quad \cdots (6)$$

The calculation device according to the embodiment (for example, the calculation device 110) is configured to derive a solution that seems to be good for the optimization problem expressed by the above-mentioned fifth equation (or sixth equation). In the calculation device according to the embodiment, a first vector such that the value of the objective function f *(x)* becomes small is obtained. The first vector is, for example, "0" or "1". The first vector may be, for example, "-1" or "1". "$A_{q,i}$" is a coefficient of the inequality constraints. The matrix "A" is a coefficient matrix of inequality constraints.

Constraints may be given as equality. In this case, it can be regarded as corresponding to the special case of "$a_q = b_q$". Equality constraints can be treated as a type of inequality constraints.

In the following description, in the process of calculation in the calculation device 110, for example, the element of the first vector (first variable set (*i*=1 to *n*)) is treated as a continuous value in the range of not less than 0 and not more than 1. The "continuous value" is treated as numerical data, for example, as a floating point number or a fixed point number.

For example, the ith element (first variable $x_i$) corresponding to the ith value corresponding to the binary output is treated as a continuous value in the range of $0 \le x_i \le 1$. In connection with this constraint ($0 \le x_i \le 1$), the function "$P_h$ (x)" is used. "x" is an n-dimensional vector. The value of the function "$P_h$ (x)" is an n-dimensional vector. The function "$P_h$ (x)" constrains the value of the element (first variable $x_i$) to the range of $0 \le x_i \le 1$. The ith element of the function "$P_h$ (x)" is expressed by the following seventh equation.

$$\big(P_h(x)\big)_i = \begin{cases} 1 & (x_i > 1) \\ x_i & (0 \le x_i \le 1) \\ 0 & (x_i < 0) \end{cases} \quad \cdots (7)$$

The function "$P_h$ (x)" corresponds to the proximity operator of the function "h (x)". The function "h (x)" is a convex function. For example, in the function "h (x)", the function "h (x)" is 0 when "x" includes an element that is not "being not less than 0 and not more than 1". The function "h (x)" takes the value of infinity when all the elements of "x" are not "being not less than 0 and not more than 1".

In the embodiment, the function "$P_g$ (w)" is used with respect to the sixth equation, which is an inequality constraint. The vector w is m-dimensional. The function "$P_g$ (w)" is an m-dimensional vector value. The q-th element of the function "$P_g$ (w)" is expressed by the eighth equation.

$$\big(P_g(w)\big)_q = \begin{cases} w_q - \sigma a_q & (w_q < \sigma a_q) \\ 0 & (\sigma a_q \le w_q \le \sigma b_q) \\ w_q - \sigma b_q & (w_q > \sigma b_q) \end{cases} \quad \cdots (8)$$

In the eighth equation, "$\sigma$" is a parameter for adjusting the operation of the calculation device according to the embodiment. "$\sigma$" is a positive constant. The value of "$\sigma$" may have some degrees of freedom. "$\sigma$" may be, for example, the reciprocal value of the square of the maximum singular value of the coefficient matrix "A" of the inequality constraint. "$\sigma$" may be, for example, a value slightly smaller than the value of the reciprocal of the square.

The function "$P_g$ (w)" corresponds to, for example, a proximity operator of a function obtained by multiplying the convex conjugate of the function "g (w)" by $\sigma$. The function "g (w)" is a convex function. The function "g (w)" is 0 when the m-dimensional vector w satisfies "a $\le$ w $\le$ b". The function "g (w)" takes the value of infinity when the m-dimensional vector w does not satisfy "a $\le$ w $\le$ b".

"p (k)" is a function that gradually increases from 0. For example, "p (k)" may be increased from 0 to 2. Due to "p (k)", a bifurcation phenomenon occurs in the process of repeated calculation by the calculation device. "d (x, k)" has a role of setting the value of "$x_i$" to either 0 or 1.

The update of the third vector is performed by, for example, the following ninth equation.

$$u(k+1) = G\big(u(k) + \sigma AV\big) \quad \cdots (9)$$

In the ninth equation, "V" is a vector. The function "G" on the right side of the ninth equation is "$P_g$" in the third equation.

In the embodiment, in the case of non-binary value (for example, continuous value), "i" in the above description of the first to ninth equations is replaced with "j". In the case of non-binary values (for example, continuous values), the range of the jth entry of "$x_j$" value does not have to be not less than 0 and not more than 1. For example, input information 771 (see FIG. 1) may include information (data) that specifies a range of values for continuous variables in the optimization model. Information Id2 may be supplied from the acquisition part 78 to the first processing portion 10P. For example, the function "$P_h$ (x)" may limit the value of the jth entry of "$x_j$" according to the information Id2 regarding the designation of the range.

In the following, an example of the configuration applicable to the update of the third vector will be described.

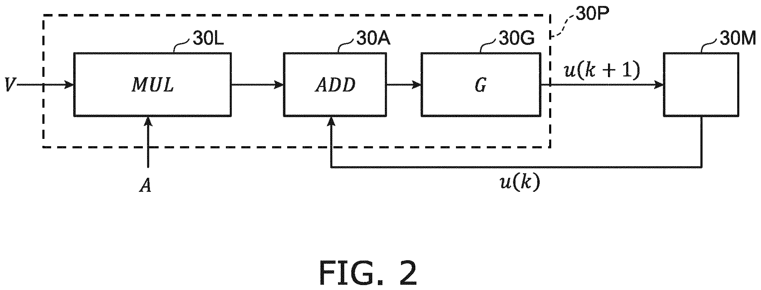

FIG. 2 is a schematic view illustrating a part of the calculation device according to the embodiment.

As shown in FIG. 2, the third processing portion 30P includes, for example, a multiplication circuit 30L, an addition circuit 30A, and a third vector function circuit 30G. The multiplication circuit 30L derives a product of the matrix "A" and the vector "V". The result (output) of the multiplication circuit 30L is supplied to the addition circuit 30A. The addition circuit 30A derives a sum of the result (output) of the multiplication circuit 30L and the third vector u (k) before update stored in the third memory portion 30M. The result (output) of the addition circuit 30A is supplied to the third vector function circuit 30G. With such a configuration, the updated third vector u (k + 1) can be obtained. The updated third vector u (k + 1) is supplied to the third memory portion 30M.

The third vector, for example, adjusts the influence in the multiple inequality constraints. For example, if the first vector does not satisfy one of the multiple inequalities, the element of the third vector u (k + 1) corresponding to the one inequality is changed. The change of the third vector is repeatedly performed, and the change of the third vector is accumulated. This adjusts the influence of each of the multiple inequalities. As a result, the first vector can be appropriately returned to the region of the feasible solution.

In a circuit block illustrated in FIG. 2, it is determined whether the first vector satisfies the inequality constraint. If the first vector does not satisfy the inequality constraint, a modification using the third vector is carried out. For the determination, a value having the first vector as a main component may be used as the vector "V" which is the input of the circuit block. The value of the vector "V" affects the speed of convergence of the optimization calculation or the error of the result of the optimization calculation.

In the embodiment, the optimization problem can be appropriately solved when the inequality constraint exists. In the embodiment, for example, a non-convex objective function can also be handled.

In the embodiment, it is not necessary to calculate the Hessian matrix or the inverse matrix of the Hessian matrix. For example, the capacity of the memory part 70M may be smaller than that of the Newton method. For example, it can handle large-scale optimization.

In the embodiment, for example, each element of the n-dimensional or m-dimensional vector can be calculated in parallel.

In the embodiment, in the calculation of the first function, for example, the calculation by pipeline can be performed. For example, in the calculation of the product of matrices and vectors, for example, the calculation by pipeline is feasible. For example, it is possible to calculate with high efficiency. High speed can be achieved by parallel calculation and pipeline calculation. According to the embodiment, it is possible to provide a calculation device capable of improving the calculation speed.

In the embodiment, data of three types of vector values are stored in the memory part 70M. It suffices if the data for the past one time is stored. The memory part 70M can be configured with some flip-flops.

In the embodiment, after the calculation result in the processing portion is supplied to another circuit, the calculation result does not have to be held in the processing portion. For example, the processing portion can be configured as a combination of logic gates.

The calculation device according to the embodiment can be configured by, for example, a digital circuit. In the embodiment, the design of digital circuits is easy. The digital circuit may include, for example, an FPGA (Field Programmable Gate Array) or an ASIC (application specific integrated circuit) or the like. The calculation device according to the embodiment may be configured by, for example, a GPU (Graphics Processing Unit). For example, it may be configured as software with a high degree of parallelism. The calculation device according to the embodiment may function as software of a general-purpose processor. The operation of the calculation device according to the embodiment may be executed in the cloud, for example.

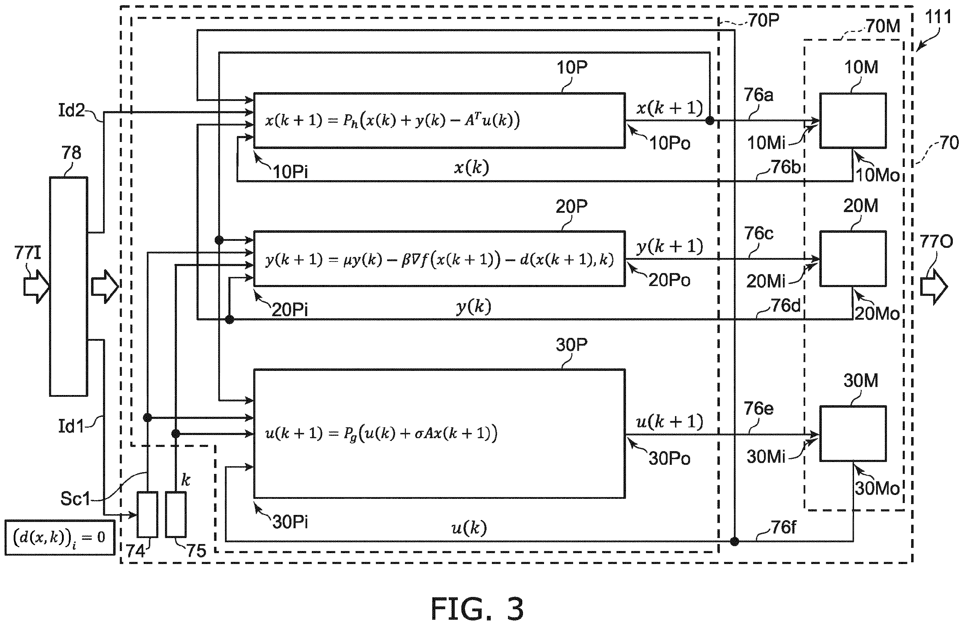

FIG. 3 is a schematic view illustrating a calculation device according to the embodiment.

As shown in FIG. 3, a calculation device 111 according to the embodiment includes the processing device 70. In the calculation device 111, a part of the configuration and operation of the processing portion and the memory portion is different from those in the calculation device 110.

In the calculation device 111, the first vector x *(k)* before the update stored in the first memory portion 10M is supplied to the first processing portion 10P. The second vector y (k) before the update stored in the second memory portion 20M is supplied to the second processing portion 20P and the first processing portion 10P. The third vector *u (k)* before the update stored in the third memory portion 30M is supplied to the third processing portion 30P and the first processing portion 10P.

In the calculation device 111, the updated first vector x (k + 1) output from the first processing portion 10P is supplied to the first memory portion 10M, the second processing portion 20P, and the third processing portion 30P. The updated second vector y *(k + 1)* output from the second processing portion 20P is supplied to the second memory portion 20M. The updated third vector *u (k + 1)* output from the third processing portion 30P is input to the third memory portion 30M. In the calculation device 111, the third update includes updating the third vector using the first vector. Other configurations in the calculation device 111 may be the same as the configuration of the calculation device 110.

As shown in FIG. 3, in this example, the calculation device 111 includes the first to sixth signal paths 76a to 76f. The processing input part, the processing output part, the memory input part, and the memory output part may be connected by the first to sixth signal paths 76a to 76f.

In the calculation device 111, for example, the calculation of the following tenth equation is carried out in the first processing portion 10P.

$$x(k + 1) = P_h\big(x(k) + y(k) - A^T u(k)\big) \quad \cdots (10)$$

In the second processing portion 20P, for example, the following calculation of the eleventh equation is carried out.

$$y(k + 1) = \mu y(k) - \beta \nabla f\big(x(k + 1)\big) - d(x(k + 1), k) \quad \cdots (11)$$

In the third processing portion 30P, for example, the following calculation of the twelfth equation is carried out.

$$u(k + 1) = P_g\big(u(k) + \sigma A x(k + 1)\big) \quad \cdots (12)$$

Also in the calculation device 111, the optimization problem can be appropriately solved when the inequality constraint exists. For example, it can handle non-convex objective functions. For example, it can handle large-scale optimization. Parallel calculation is possible. It is possible to provide a calculation device that can improve the calculation speed.

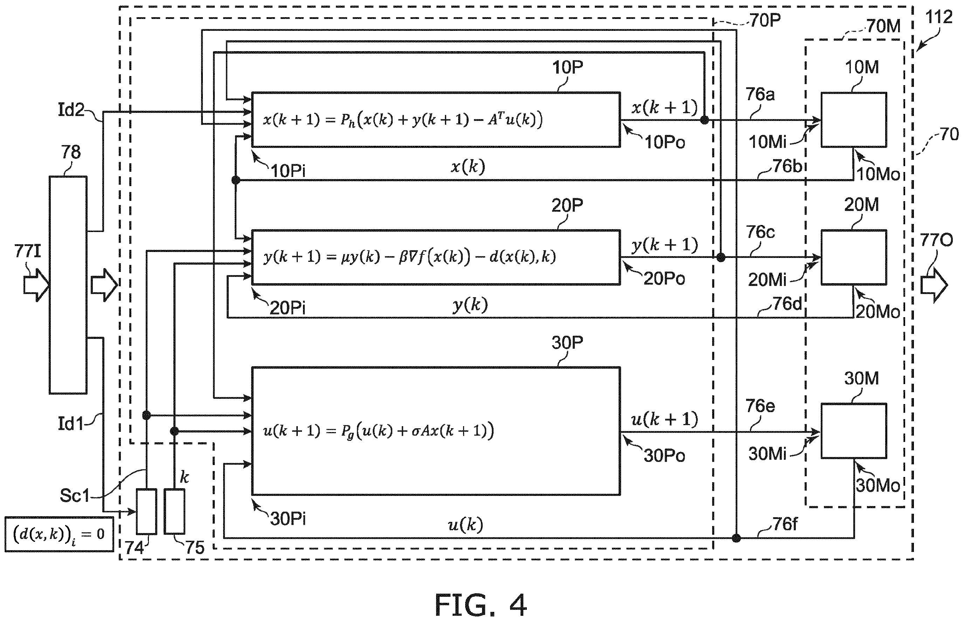

FIG. 4 is a schematic view illustrating a calculation device according to the embodiment.

As shown in FIG. 4, a calculation device 112 according to the embodiment includes the processing device 70. In the calculation device 112, a part of the configuration and operation of the processing portion and the memory portion is different from those in the calculation device 110 or the calculation device 111.

In the calculation device 112, the first vector x *(k)* before the update stored in the first memory portion 10M is supplied to the first processing portion 10P and the second processing portion 20P. The second vector y (k) before the update stored in the second memory portion 20M is supplied to the second processing portion 20P. The third vector *u (k)* before the update stored in the third memory portion 30M is supplied to the third processing portion 30P and the first processing portion 10P.

In the calculation device 112, the updated first vector x *(k + 1)* output from the first processing portion 10P is supplied to the first memory portion 10M and the third processing portion 30P. The updated second vector *y (k + 1)* output from the second processing portion 20P is supplied to the second memory portion 20M and the first processing portion 10P. The updated third vector *u (k + 1)* output from the third processing portion 30P is input to the third memory portion 30M.

In the calculation device 112, the third update includes updating the third vector using the first vector. Other configurations in the calculation device 112 may be the same as the configuration of the calculation device 110 or the calculation device 111.

As shown in FIG. 4, the calculation device 112 may include the first to sixth signal paths 76a to 76f. The processing input part, the processing output part, the memory input part, and the memory output part may be connected by the first to sixth signal paths 76a to 76f.

In the calculation device 112, in the first processing portion 10P, for example, the calculation of the following thirteenth equation is carried out.

$$x(k + 1) = P_h\big(x(k) + y(k + 1) - A^T u(k)\big) \quad \cdots (13)$$

In the second processing portion 20P, for example, the calculation of the following fourteenth equation is carried out.

$$y(k + 1) = \mu y(k) - \beta \nabla f\big(x(k)\big) - d(x(k), k) \quad \cdots (14)$$

In the third processing portion 30P, for example, the calculation of the following fifteenth equation is carried out.

$$u(k + 1) = P_g\big(u(k) + \sigma A x(k + 1)\big) \quad \cdots (15)$$

Even in the calculation device 112, the optimization problem can be appropriately solved when the inequality constraint exists. For example, it can handle non-convex objective functions. For example, it can handle large-scale optimization. Parallel calculation is possible. It is possible to provide a calculation device that can improve the calculation speed.

In the following, an example of the configuration for parallel calculation will be described.

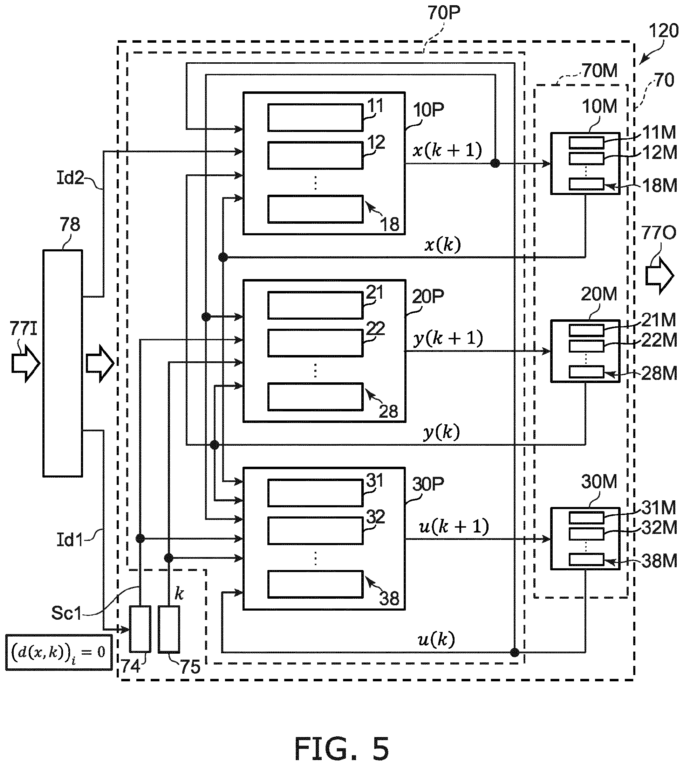

FIG. 5 is a schematic view illustrating a calculation device according to the embodiment.

In a calculation device 120 according to the embodiment shown in FIG. 5, the calculation in the calculation device 110 is performed in parallel. In the calculation device 120, the first processing portion 10P includes multiple first processing portions 18. The multiple first processing portions 18 include, for example, a processing portion 11 and a processing portion 12. One of the multiple first processing portions 18 performs a part of the first update. Another one of the multiple first processing portions 18 performs another part of the first update. At least a part of the above other part of the first update can be performed at the same time as the above part of the first update. High speed is possible by parallel calculation.

As shown in FIG. 5, the first memory portion 10M may include multiple first memory portions 18M. The multiple first memory portions 18M include, for example, a memory portion 11M and a memory portion 12M. One of the multiple first memory portions 18M stores a part of the first vector after the above part of the first update. Another one of the multiple first memory portions 18M stores another part of the first vector after the above-mentioned other part of the first update, for example, one of the multiple first memory portions 18M. One is combined with one of the multiple first processing portions 18. For example, another one of the multiple first memory portions 18M is combined with another one of the multiple first processing portions 18.

As shown in FIG. 5, the second processing portion 20P may include multiple second processing portions 28. The multiple second processing portions 28 include, for example, a processing portion 21 and a processing portion 22. One of the multiple second processing portions 28 performs a part of the second update. Another one of the multiple second processing portions 28 performs another part of the second update. At least a part of the above other part of the second update can be performed at the same time as the above part of the second update. High speed is possible by parallel calculation.

As shown in FIG. 5, the second memory portion 20M may include multiple second memory portions 28M. The multiple second memory portions 28M include, for example, a memory portion 21M and a memory portion 22M. One of the multiple second memory portions 28M stores a part of the second vector after the above part of the second update. Another one of the multiple second memory portions 28M stores another part of the second vector after the above other part of the second update. For example, one of the multiple second memory portions 28M is combined with one of the multiple second processing portions 28. For example, another one of the multiple second memory portions 28M is combined with another one of the multiple second processing portions 28.

As shown in FIG. 5, the third processing portion 30P may include multiple third processing portions 38. The multiple third processing portions 38 include, for example, a processing portion 31 and a processing portion 32. One of the multiple third processing portions 38 performs a part of the third update. Another one of the multiple third processing portions 38 performs another part of the third update. At least a part of the above other part of the third update can be performed at the same time as the above part of the third update. High speed is possible by parallel calculation.

As shown in FIG. 5, the third memory portion 30M may include multiple third memory portions 38M. The multiple third memory portions 38M include, for example, a memory portion 31M and a memory portion 32M or the like. One of the multiple third memory portions 38M stores a part of the third vector after the above part of the third update. Another one of the multiple third memory portions 38M stores another part of the third vector after the above other part of the third update. For example, one of the multiple third memory portions 38M is combined with one of the multiple third processing portions 38. For example, another one of the multiple third memory portions 38M is combined with another one of the multiple third processing portions 38.

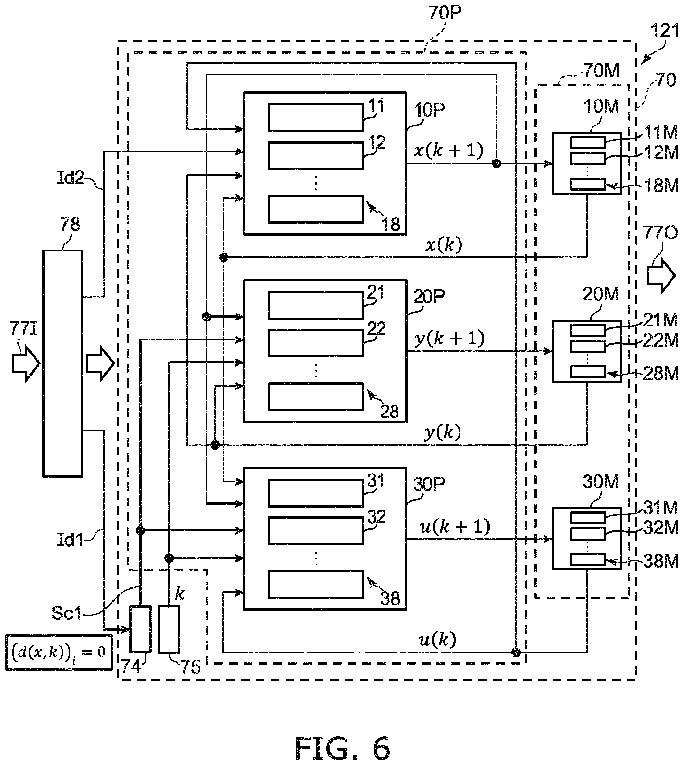

FIG. 6 is a schematic view illustrating a calculation device according to the embodiment.

In a calculation device 121 according to the embodiment shown in FIG. 6, the calculation in the calculation device 111 is performed in parallel. The configuration of the multiple processing portions and the multiple memory portions in the calculation device 121 may be the same as the configuration in the calculation device 120.

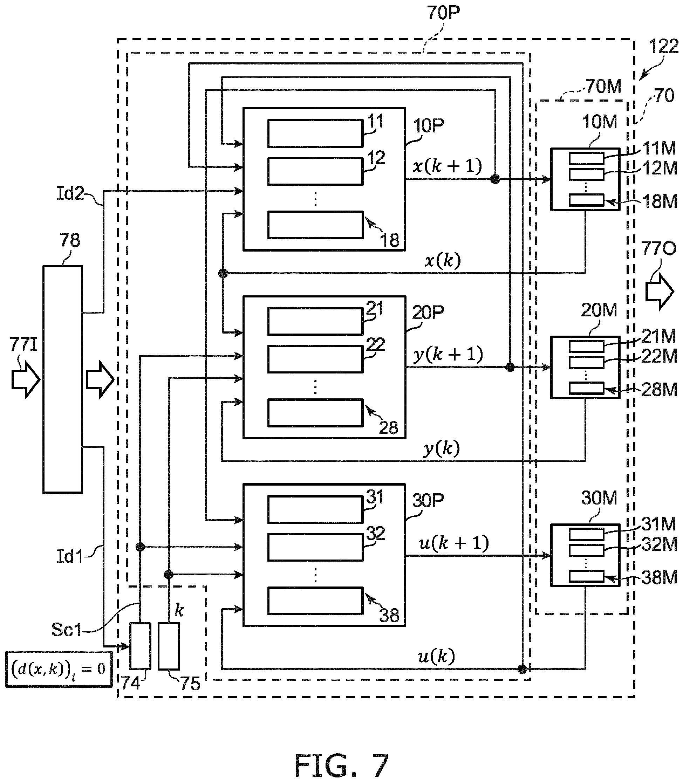

FIG. 7 is a schematic view illustrating a calculation device according to the embodiment.

In a calculation device 122 according to the embodiment shown in FIG. 7, the calculation in the calculation device 112 is performed in parallel. The configuration of the multiple processing portions and the multiple memory portions in the calculation device 122 may be the same as the configuration in the calculation device 120.

In this way, parallel calculation may be performed in the calculation device according to the embodiment. The processor 70P may include multiple processing portions. The multiple processing portions correspond to, for example, at least one or the like of multiple of first processing portions 18, multiple second processing portions 28, or multiple third processing portions 38.

For example, one of the multiple processing portions can perform a part of the first update, and another one of the multiple processing portions can perform another one of the first update. For example, one of the multiple processing portions can perform a part of the second update, and another one of the multiple processing portions can perform another part of the second update. For example, one of the multiple processes can perform a part of the third update, and another one of the multiple processes can perform another part of the third update.

The memory part 70M may include multiple memory portions. The multiple memory portions correspond to, for example, at least one of multiple first memory portions 18M, multiple second memory portions 28M, and multiple third memory portions 38M. For example, a part of the multiple memory portions can store a part of the first vector, and another part of the multiple memory portions can store another part of the first vector. For example, another part of the multiple memory portions can store a part of the second vector, and another part of the multiple memory portions can store another part of the second vector. For example, another part of the multiple memory portions can store a part of the third vector, and another part of the multiple memory portions can store another part of the third vector.

Various calculation conditions are input to the calculation device according to the embodiment. For example, the calculation condition is acquired by the acquisition part 78, and the calculation condition is supplied to the processing device 70. The calculation condition includes, for example, a calculation method (calculation formula, etc.) of the first gradient of the objective function. The calculation conditions include, for example, an initial value of the first vector and an initial value of the second vector. The calculation condition includes, for example, the number of repetitions "T". The calculation condition includes, for example, a coefficient "μ" for adjustment. The calculation condition includes, for example, inequality constraints (or equality constraints). The calculation condition includes, for example, the matrix "A", the vector "a" and the vector "b".

A calculation example will be described below.

In the calculation example, the optimization problem of the production plan using two machines is solved. The same product is manufactured by two machines.

In the calculation example, the variable "$x_1$" corresponds to whether or not to operate the first machine. When operating the first machine, the variable "$x_1$" is 1. When the first machine is not operated, the variable "$x_1$" is 0.

In the calculation example, the variable "$x_2$" corresponds to whether or not to operate the second machine. When operating the second machine, the "variable $x_2$" is 1. When the second machine is not operated, the variable "$x_2$" is 0. The variable "$x_1$" and the variable "$x_2$" are binary.

Let the variable "$x_3$" be the amount produced by the first machine. Let the variable "$x_4$" be the amount produced by the second machine. The variable "$x_3$" and the variable "$x_4$" are non-binary. These variables are continuous variables.

In this calculation example, it is assumed that the production cost is expressed by the following sixteenth equation.

$$x_1 + 2x_2 + 2x_3^2 + x_4^2 \qquad \cdots (16)$$

For example, when operating the first machine, a fixed cost of "1" is incurred. If the first machine is not operated, the fixed cost is set to "0". When operating the second machine, a fixed cost of "2" is incurred. If the second machine is not operated, the fixed cost is set to "0".

For example, when operating the first machine, a running cost proportional to the square of the production amount is incurred. In the first machine, the coefficient for running cost is **"2".**

For example, when operating the second machine, a running cost proportional to the square of the production amount is incurred. In the second machine, the coefficient for running cost is "1".

The production amount of the product is the sum of the production amount by the first machine and the production amount by the second machine. The target production amount (sum of both) is "1.2".

At this time, the following constraints are provided. That is, when operating the first machine, the production amount of the first machine is not less than 0.5 and not more than 1.0. When the first machine is not operated, the production amount of the first machine is 0. When operating the second machine, the production amount of the second machine is not less than 0.5 and not more than 1.0. When the second machine is not operated, the production volume of the second machine is zero.

The above condition is expressed by the following seventeenth equation.

$$
\begin{aligned}
x_3 + x_4 &= 1.2, \\
0.5x_1 &\le x_3 \le x_1, \qquad \cdots (17) \\
0.5x_2 &\le x_4 \le x_2
\end{aligned}
$$

Under such conditions, the variables "$x_1$", "$x_2$", "$x_3$" and "$x_4$" that minimize the cost are required. As shown in the calculation results described later, the cost is minimized when "$x_1$" = 1, "$x_2$" = 1, "$x_3$" = 0.5, and "$x_4$" = 0.7. That is, the cost is minimized when a production of 0.5 volume is performed by using the first machine and a production of 0.7 volume is performed by using the second machine.

In the following, an example of notation by a matrix and a vector will be described. The variables "$x_1$", "$x_2$", "$x_3$" and "$x_4$" can be collectively represented by a four-dimensional column vector x. The objective function (cost equation) f (x) is expressed by the following eighteenth equation.

$$J = \begin{bmatrix} 0 & 0 & 0 & 0 \\ 0 & 0 & 0 & 0 \\ 0 & 0 & -4 & 0 \\ 0 & 0 & 0 & -2 \end{bmatrix}, \qquad e = \begin{bmatrix} 1 \\ 2 \\ 0 \\ 0 \end{bmatrix} \quad \cdots (18)$$

The objective function is expressed by the following nineteenth equation.

$$f(x) = -\frac{1}{2}x^T J x + e^T x \qquad \cdots (19)$$

The constraint condition is expressed by the following twentieth equation.

$$A = \begin{bmatrix} 0 & 0 & 1 & 1 \\ 0.5 & 0 & -1 & 0 \\ 0 & 0.5 & 0 & -1 \\ -1 & 0 & 1 & 0 \\ 0 & -1 & 0 & 1 \end{bmatrix}, \qquad a = \begin{bmatrix} 1.2 \\ -\infty \\ -\infty \\ -\infty \end{bmatrix}, \qquad b = \begin{bmatrix} 1.2 \\ 0 \\ 0 \\ 0 \end{bmatrix}$$

$$\cdots (20)$$

At this time, the sixth equation already described is applied.

In the calculation example, the number of repetitions (total number) "T" is 1000. The coefficient "$\beta$" is 0.1. The coefficient "$\mu$" for adjustment is 3/4. The coefficient "$\sigma$" is 0.2.

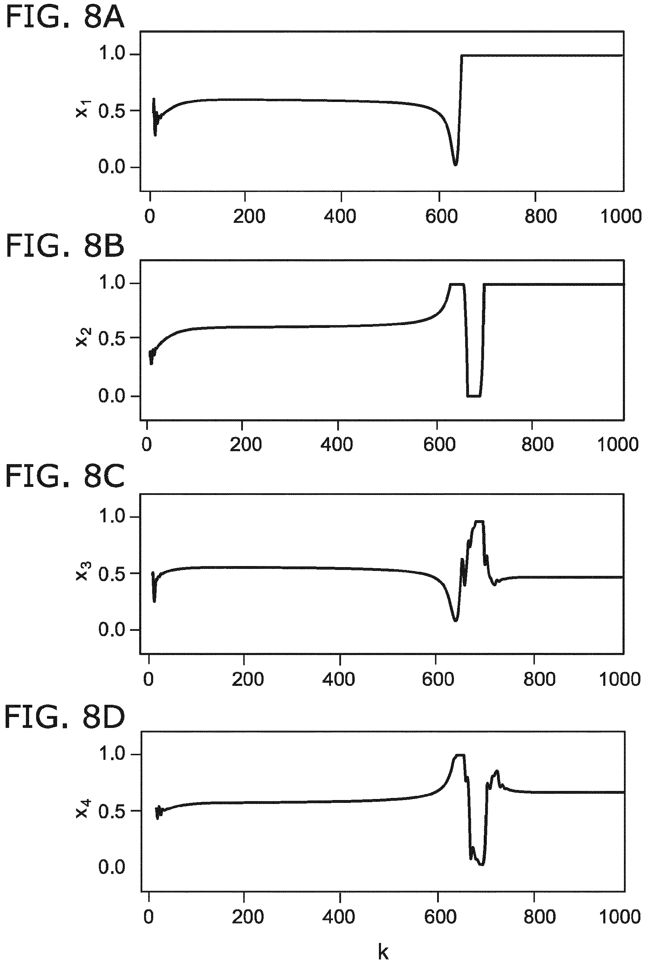

FIGS. 8A to 8D, FIGS. 9A to 9D, and FIGS. 10A to 10E are graphs illustrating the operation of the calculation device according to the embodiment.

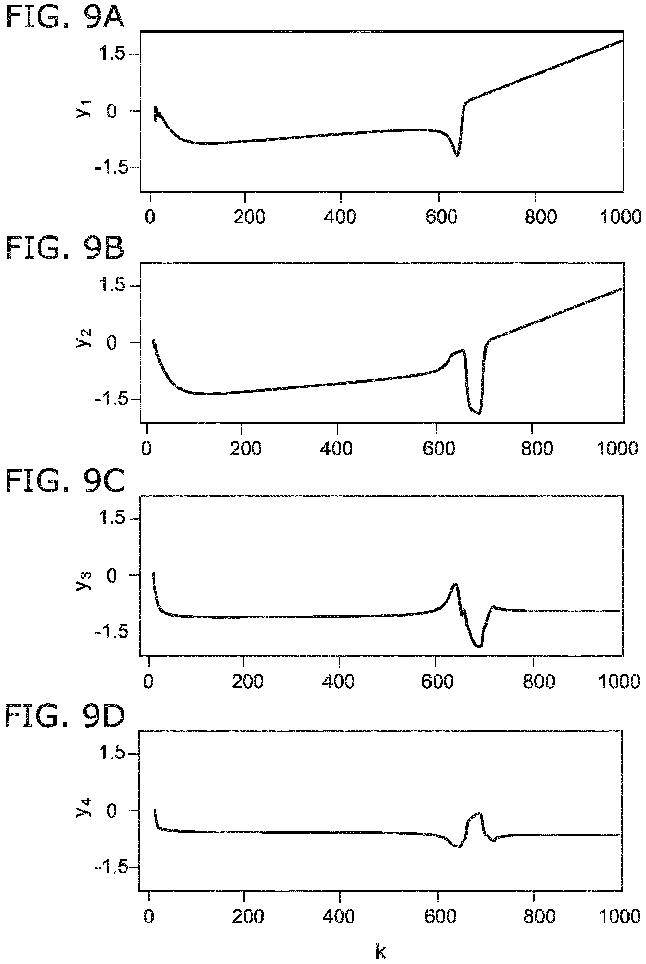

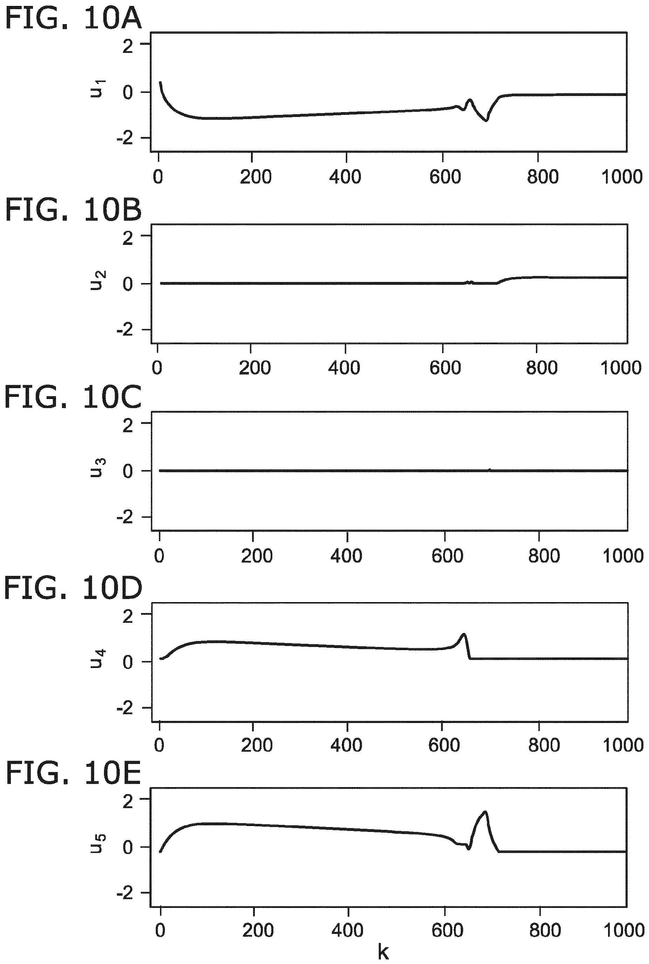

These figures are calculation examples in the calculation device 110. In these figures, the horizontal axis is "k" (number of repetitions). The vertical axis of each of FIGS. 8A to 8D is $x_1$, $x_2$, $x_3$ and $x_4$. The vertical axis of each of FIGS. 9A to 9D is $y_1$, $y_2$, $y_3$ and $y_4$. The vertical axis of each of FIGS. 10A to 10E is $u_1$, $u_2$, $u_3$, $u_4$ and $u_5$. As shown in FIGS. 8A to 8D, solutions of "$x_1$" = 1, "$x_2$" = 1, "$x_3$" = 0.5, and "$x_4$" = 0.7 are obtained.

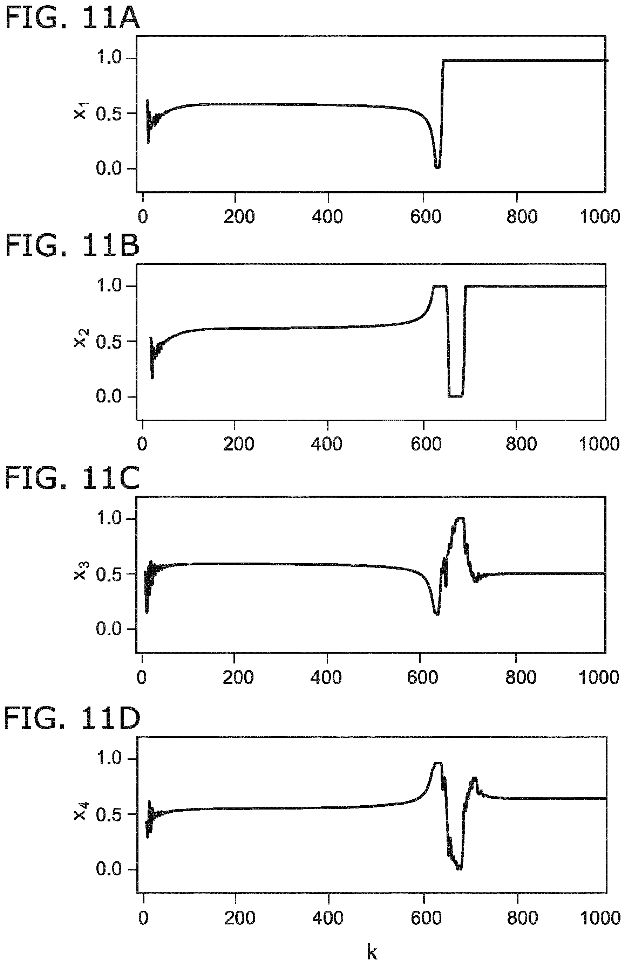

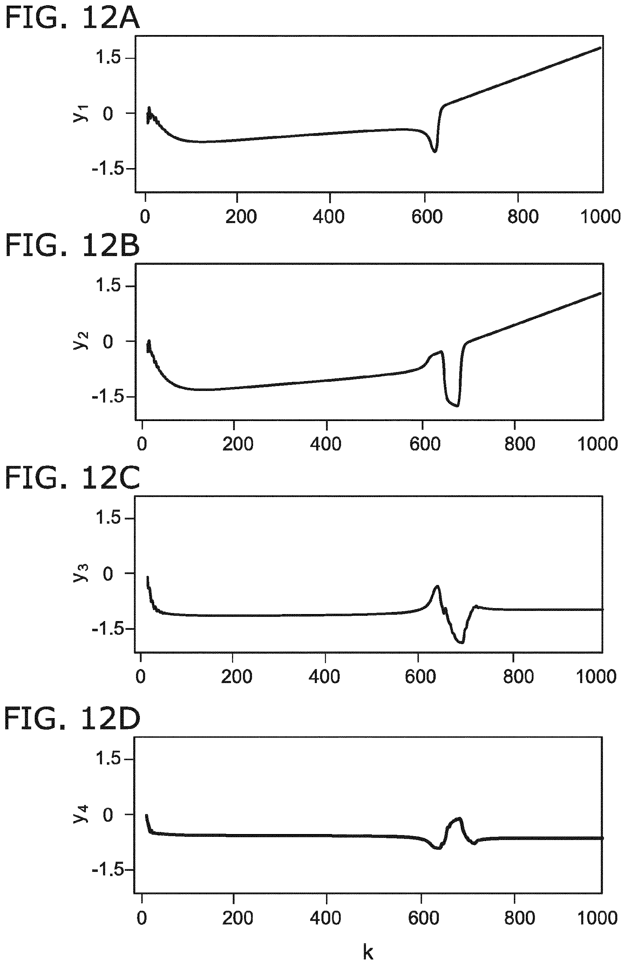

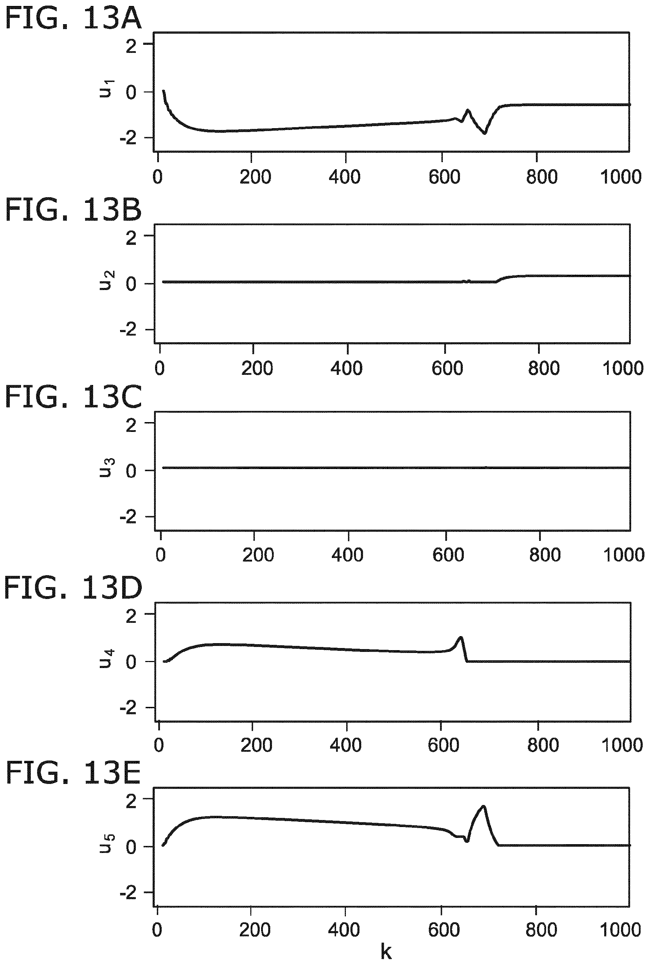

FIGS. 11A to 11D, FIGS. 12A to 12D, and FIGS. 13A to 13E are graphs illustrating the operation of the calculation device according to the embodiment.

These figures are calculation examples in the calculation device 111. The horizontal axis and the horizontal axis in these figures are the same as the horizontal axis and the vertical axis described with respect to FIGS. 8A to 8D, FIGS. 9A to 9D, and FIGS. 10A to 10E. As shown in FIGS. 11A to 11D, solutions of "$x_1$" = 1, "$x_2$" = 1, "$x_3$" = 0.5, and "$x_4$" = 0.7 are obtained.

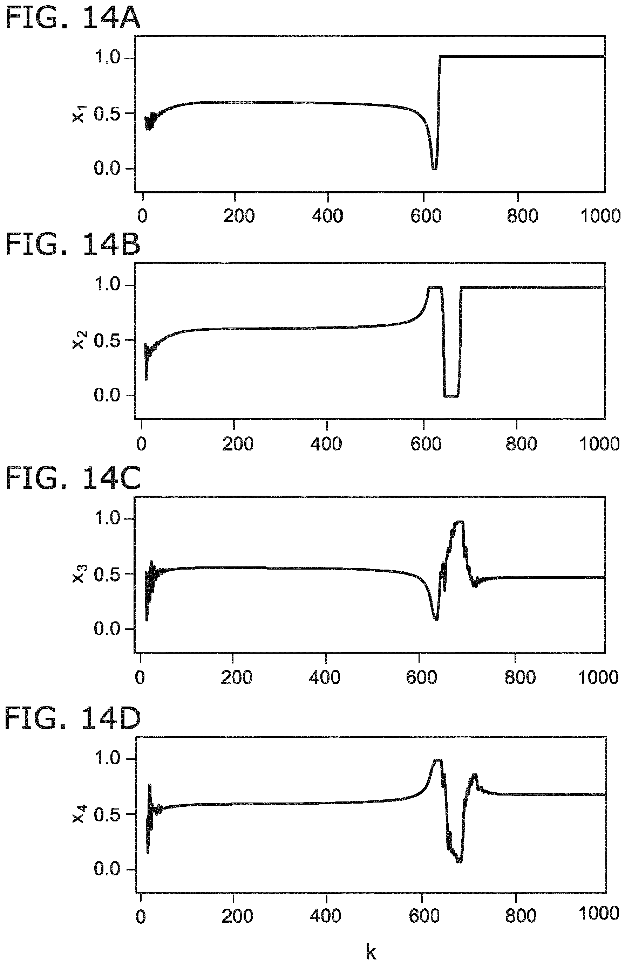

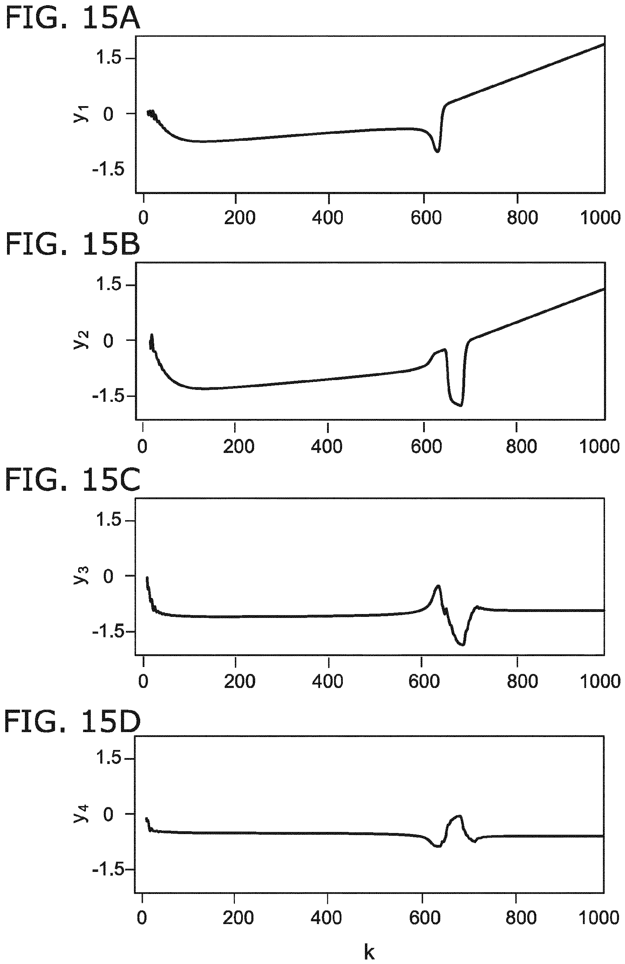

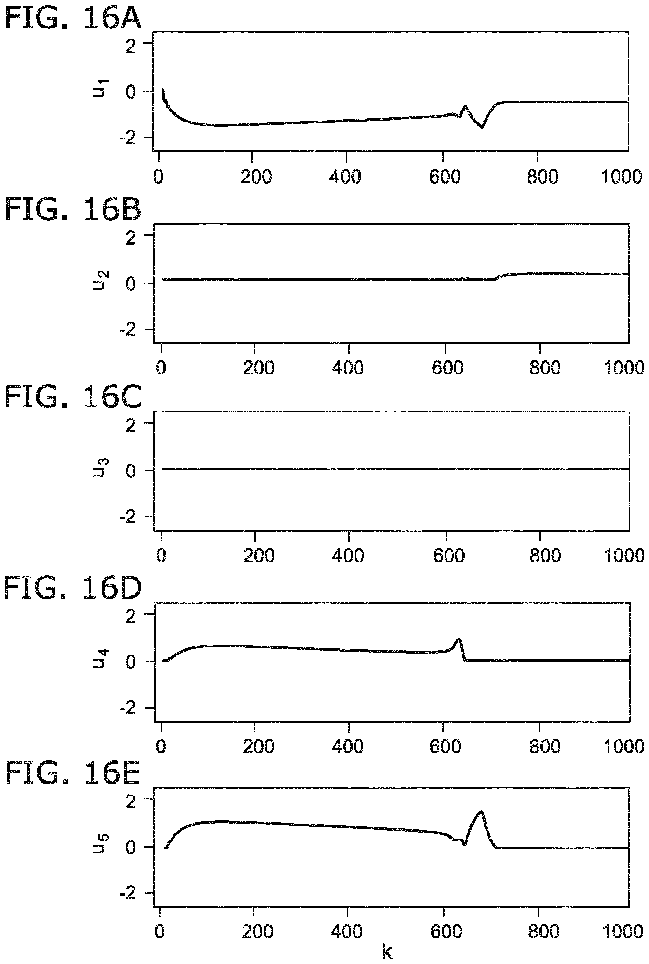

FIGS. 14A to 14D, FIGS. 15A to 15D, and FIGS. 16A to 16E are graphs illustrating the operation of the calculation device according to the embodiment.

These figures are calculation examples in the calculation device 112. The horizontal axis and the horizontal axis in these figures are the same as the horizontal axis and the vertical axis described with respect to FIGS. 8A to 8D, FIGS. 9A to 9D, and FIGS. 10A to 10E. As shown in FIGS. 14A to 14D, solutions of "$x_1$" = 1, "$x_2$" = 1, "$x_3$" = 0.5, and "$x_4$" = 0.7 are obtained.

In the embodiment, the first processing portion 10P, the second processing portion 20P, and the third processing portion 30P may be, for example, a first portion, a second portion, and a third portion of one integrated circuit. The multiple first processing portions 18, the multiple second processing portions 28, and the multiple third processing portions 38 may be different portions of one integrated circuit. In the embodiment, the first memory portion 10M, the second memory portion 20M, and the third memory portion 30M may be, for example, the first portion, the second portion, and the third portion of one memory portion. The multiple first memory portions 18M, the multiple second memory portions 28M, and the multiple third memory portions 38M may be different portions of one memory portion.

FIGS. 1 and 3 to 7 correspond to a flowchart of processing performed by the processing device 70. The "processing portion" corresponds to, for example, the "processing operation" in the flowchart. The "memory portion" corresponds to, for example, the "memory operation" in the flowchart.

As described above, the calculation device according to the embodiment may be configured by, for example, any computer.

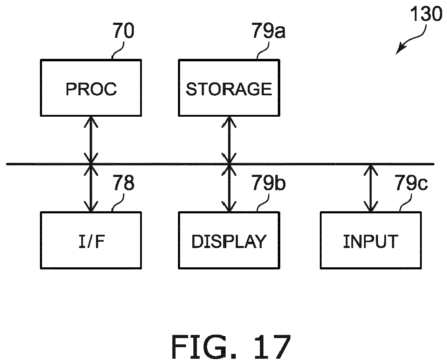

FIG. 17 is a schematic view illustrating the operation of the calculation device according to the embodiment.

As shown in FIG. 17, a calculation device 130 according to the embodiment includes the processing device 70. The processing device 70 includes, for example, a CPU (Central Processing Unit) and the like. The processing device 70 includes, for example, an electronic circuit or the like. The calculation device 130 may include the acquisition part 78 (for example, an interface). The calculation device 130 may include a memory device 79a. The memory device 79a may include, for example, at least one of a ROM (Read Only Memory) or a RAM (Random Access Memory). The calculation device 130 may include a display part 79b, an input part 79c, and the like. The input part 79c may include, for example, an operating device (for example, a keyboard, a mouse, a touch input unit, or the like).

Multiple elements included in the calculation device 130 can communicate with each other by at least one of wireless or wired methods. The locations where the multiple elements included in the calculation device 130 are provided may be different from each other. As the calculation device 130, for example, a general-purpose computer may be used. As the calculation device 130, for example, multiple computers connected to each other may be used.

Second embodiment

The second embodiment relates to a calculation program. This calculation program is a calculation program that causes a computer to perform a processing procedure. The processing procedure includes the first update of the first vector, the second update of the second vector, and the third update of the third vector. The first update includes updating the first vector using the second vector and the third vector. The second update includes updating the second vector using the first vector. An output of at least one of the first vector obtained after repeating the processing procedure or the function of the first vector obtained after repeating the processing procedure is output. The second update includes updating the second variable $y_i$ by adding the first function calculated from the ith entry of the first variable and the second function calculated from the ith entry of the first variable $x_i$ to the ith entry of the second variable $y_i$ before the update. The second update includes updating the jth entry of the second variable $y_j$ by adding the first function calculated from the jth entry of the first variable $x_j$ to the jth entry of the second variable $y_j$ before the update. The value of the ith output is binary. The value of the jth output is non-binary.

Third embodiment

The third embodiment relates to a recording medium. The recording medium is a computer-readable recording medium that records a calculation program that causes a computer to perform a processing procedure. The processing procedure includes the first update of the first vector, the second update of the second vector, and the third update of the third vector. The first update includes updating the first vector using the second vector and the third vector. The second update includes updating the second vector using the first vector. An output of at least one of the first vector obtained after repeating the processing procedure or the function of the first vector obtained after repeating the processing procedure is output. The second update includes updating the second variable $y_i$ by adding the first function calculated from the ith entry of the first variable $x_i$ and the second function calculated from the ith entry of the first variable $x_i$ to the ith entry of the second variable $y_i$ before the update. The second update includes updating the jth entry of the second variable $y_j$ by adding the first function calculated from the jth entry of the first variable $x_j$ to the jth entry of the second variable $y_j$ before the update. The value of the ith entry of the output is binary. The value of the jth entry of the output is non-binary.

Fourth embodiment

The fourth embodiment relates to a calculation method. As for the calculation method, the processing device 70 is made to perform the processing procedure. The processing procedure includes the first update of the first vector, the second update of the second vector, and the third update of the third vector. The first update includes updating the first vector using the second vector and the third vector. The second update includes updating the second vector using the first vector. The processing device outputs an output of at least one of the first vector obtained after repeating the processing procedure or the function of the first vector obtained after repeating the processing procedure. The second update includes updating the second variable $y_i$ by adding the first function calculated from the ith entry of the first variable $x_i$ and the second function calculated from the ith entry of the first variable $x_i$ to the ith entry of the second variable $y_i$ before the update. The second update includes updating the jth entry of the second variable $y_j$ by adding the first function calculated from the jth entry of the first variable $x_j$ to the jth entry of the second variable $y_j$ before the update. The value of the ith output is binary. The value of the jth output is non-binary.

The processing (instruction) of the various information (data) described above is executed based on, for example, a program (software). For example, a computer stores this program and reads this program to process the various information described above.

The processing of the above various information may be recorded on a magnetic disk (flexible disk, hard disk, etc.), an optical disk (CD-ROM, CD-R, CD-RW, DVD-ROM, DVD ± R, DVD ± RW, etc.), semiconductor memory, or other recording medium as a program that can cause a computer to execute.

For example, the information recorded on the recording medium can be read out by a computer (or an embedded system). In the recording medium, the recording format (storage format) is arbitrary. For example, the computer reads a program from the recording medium and causes the CPU to execute the instructions described in the program based on the program. In the computer, the acquisition (or reading) of the program may be performed through the network.

At least a part of the above information processing may be performed in various software running on the computer based on the program installed on the computer (or embedded system) from the recording medium. This software includes, for example, an operating system or the like. This software may include, for example, middleware running on a network or the like.

The recording medium in the embodiment also includes a recording medium obtained by downloading and storing a program obtained by LAN, the Internet, or the like. The above processing may be performed based on multiple recording media.

The computer according to the embodiment includes one or more devices (e.g., a personal computer, etc.). The computer according to the embodiment may include multiple devices connected by a network.

The embodiment may include the following configurations (e.g., technical proposals).

Configuration 1

A calculation device, comprising:

a processing device configured to perform a processing procedure,
the processing procedure including a first update of a first vector, a second update of a second vector, and a third update of a third vector,
the first update including updating the first vector using the second vector and the third vector,
the second update including updating the second vector using the first vector,
the processing device being configured to output an output of at least one of the first vector obtained after repeating the processing procedure or a function of the first vector obtained after the repeating the processing procedure,
the output including an ith entry of a value and a jth entry of a value,
the i being an integer of not less than 1 and not more than $n$,
the $n$ being an integer of not less than 2,
the j being an integer of not less than 1 and not more than the $n$,
the j being different from the i,
the ith entry of the value being binary,
the jth entry of the value being non-binary,
a variable of the first vector including the ith entry of a first variable $x_i$ and the jth entry of a first variable $x_j$,
a variable of the second vector including the ith entry of a second variable $y_i$ and the jth entry of a second variable $y_j$,
the second update including updating the ith entry of the second variable $y_i$ by adding a first function calculated from the ith entry of the first variable $x_i$ and a second function calculated from the ith entry of the first variable $x_i$ to the ith entry of the second variable $y_i$ before the update, and
the second update including updating the jth entry of the second variable $y_j$ by adding the first function calculated from the jth entry of the first variable $x_j$ to the jth entry of the second variable $y_j$ before the update.

Configuration 2

The calculation device according to Configuration 1, wherein

the processing device includes a first controller, and
the first controller is configured to set the ith entry of the value as a binary value and the jth entry of the value as a non-binary value based on information regarding a calculation condition.

Configuration 3

The calculation device according to Configuration 1 or 2, wherein

a variable of the third vector includes a qth third variable $u_q$,

the q is an integer not less than 1 and not more than m, and
the m is an integer not less than 1.

Configuration 4

The calculation device according to Configuration 3, wherein
the m is a number of a plurality of inequality constraints set for the first vector.

Configuration 5

The calculation device according to any one of Configurations 1 to 4, wherein

the processing device includes a processor and a memory part,
the processor is configured to perform the first update, the second update, and the third update,
the memory part is configured to store the first vector, the second vector, and the third vector,
the processor includes a plurality of processing portions,
one of the plurality of processing portions is configured to perform a part of the first update, and
an other one of the plurality of processing portions is configured to perform an other part of the first update.

Configuration 6

The calculation device according to any one of Configurations 1 to 4, wherein

the processing device includes a processor and a memory part,
the processor is configured to perform the first update, the second update, and the third update,
the memory part is configured to store the first vector, the second vector, and the third vector,
the processor includes a plurality of processing portions,
one of the plurality of processing portions is configured to perform a part of the second update, and
an other one of the plurality of processing portions is configured to perform an other part of the second update.

Configuration 7

The calculation device according to any one of Configurations 1 to 4, wherein

the processing device includes a processor and a memory part,
the processor is configured to perform the first update, the second update, and the third update,
the memory part is configured to store the first vector, the second vector, and the third vector,
the processor includes a plurality of processing portions,
one of the plurality of processing portions is configured to perform a part of the third update, and
an other one of the plurality of processing portions is configured to perform an other part of the third update.

Configuration 8

The calculation device according to any one of Configurations 1 to 4, wherein

the memory part includes a plurality of memory portions,
a part of the plurality of memory portions is configured to store a part of the first vector,
an other part of the plurality of memory portions is configured to store an other part of the first vector,
an other part of the plurality of memory portions is configured to store a part of the second vector,
an other part of the plurality of memory portions is configured to store an other part of the second vector,
an other part of the plurality of memory portions is configured to store a part of the third vector, and
an other part of the plurality of memory portions is configured to store an other part of the third vector.

Configuration 9

The calculation device according to any one of Configurations 1 to 4, wherein

the processing device includes a processor and a memory part,

the processor includes

a first processing portion configured to perform the first update,
a second processing portion configured to perform the second update,
a third processing portion configured to perform the third update,

the memory part includes

a first memory portion configured to store the first vector,
a second memory portion configured to store the second vector,
a third memory portion configured to store the third vector,

the first vector before update stored in the first memory portion is supplied to the first processing portion and the third processing portion,
the second vector before update stored in the second memory portion is supplied to the second processing portion and the first processing portion,
the third vector before update stored in the third memory portion is supplied to the third processing portion and the first processing portion,
the first vector after the update output from the first processing portion is supplied to the first memory portion, the second processing portion, and the third processing portion,
the second vector after the update output from the second processing portion is supplied to the second memory portion, and
the third vector after the update output from the third processing portion is supplied to the third memory portion.

Configuration 10

The calculation device according to any one of Configurations 1 to 4, wherein

the processing device includes a processor and a memory part,
the processor includes

a first processing portion configured to perform the first update,
a second processing portion configured to perform the second update,
a third processing portion configured to perform the third update,

the memory part includes

a first memory portion configured to store the first vector,
a second memory portion configured to store the second vector,
a third memory portion configured to store the third vector,

the first vector before update stored in the first memory portion is supplied to the first processing portion,
the second vector before update stored in the second memory portion is supplied to the second processing portion and the first processing portion,
the third vector before update stored in the third memory portion is supplied to the third processing portion and the first processing portion,
the first vector after the update output from the first processing portion is supplied to the first memory portion, the second processing portion, and the third processing portion,
the second vector after the update output from the second processing portion is supplied to the second memory portion, and the third vector after the update output from the third processing portion is supplied to the third memory portion.

Configuration 11

The calculation device according to any one of Configurations 1 to 4, wherein

the processing device includes a processor and a memory part,
the processor includes

a first processing portion configured to perform the first update,
a second processing portion configured to perform the second update,
a third processing portion configured to perform the third update,

the memory part includes

a first memory portion configured to store the first vector,
a second memory portion configured to store the second vector,
a third memory portion configured to store the third vector,

the first vector before update stored in the first memory portion is supplied to the first processing portion and the second processing portion,
the second vector before update stored in the second memory portion is supplied to the second processing portion,
the third vector before update stored in the third memory portion is supplied to the third processing portion and the first processing portion,
the first vector after the update output from the first processing portion is supplied to the first memory portion, and the third processing portion,
the second vector after the update output from the second processing portion is supplied to the second memory portion, and the first processing portion, and
the third vector after the update output from the third processing portion is supplied to the third memory portion.

Configuration 12

The calculation device according to any one of Configurations 9 to 11, wherein

the first processing portion includes a plurality of first processing portions,
one of the plurality of first processing portions performs a part of the first update,
an other one of the plurality of first processing portions performs an other part of the first update, and
at least a part of the other part of the first update is performed at a same time as the part of the first update.

Configuration 13

The calculation device according to any one of Configurations 9 to 11, wherein

the second processing portion includes a plurality of second processing portions,
one of the plurality of second processing portions performs a part of the second update,
an other one of the plurality of second processing portions performs an other part of the second update, and
at least a part of the other part of the second update is performed at a same time as the part of the second update.

Configuration 14

The calculation device according to any one of Configurations 9 to 11, wherein

the third processing portion includes a plurality of third processing portions,
one of the plurality of third processing portions performs a part of the third update,
an other one of the plurality of third processing portions performs an other part of the third update, and
at least a part of the other part of the third update is performed at a same time as the part of the third update.

Configuration 15

A calculation program causing a computer to perform a processing procedure,

the processing procedure including a first update of a first vector, a second update of a second vector, and a third update of a third vector,
the first update including updating the first vector using the second vector and the third vector,
the second update including updating the second vector using the first vector, and
an output of at least one of the first vector obtained after repeating the processing procedure or a function of the first vector obtained after the repeating the processing procedure being output,

# EP 4 239 501 A1

the output including an ith entry of a value and a jth entry of a value,

the i being an integer of not less than 1 and not more than $n$,

the $n$ being an integer of not less than 2,

the j being an integer of not less than 1 and not more than the $n$,

the j being different from the i,

the ith entry of the value being binary,

the jth entry of the value being non-binary,

a variable of the first vector including the ith entry of a first variable $x_i$ and the jth entry of a first variable $x_j$,

a variable of the second vector including the ith entry of a second variable $y_i$ and the jth entry of a second variable $y_j$,

the second update including updating the ith entry of the second variable $y_i$ by adding a first function calculated from the ith entry of the first variable $x_i$ and a second function calculated from the ith entry of the first variable $x_i$ to the ith entry of the second variable $y_i$ before the update, and

the second update including updating the jth entry of the second variable $y_j$ by adding the first function calculated from the jth entry of the first variable $x_j$ to the jth entry of the second variable $y_j$ before the update.

Configuration 16

A recording medium being a computer-readable recording medium that records a calculation program that causes a computer to perform a processing procedure,

the processing procedure including a first update of a first vector, a second update of a second vector, and a third update of a third vector,

the first update including updating the first vector using the second vector and the third vector,

the second update including updating the second vector using the first vector, and

an output of at least one of the first vector obtained after repeating the processing procedure or a function of the first vector obtained after the repeating the processing procedure being output,

the output including an ith entry of a value and a jth entry of a value,

the i being an integer of not less than 1 and not more than $n$,

the $n$ being an integer of not less than 2,

the j being an integer of not less than 1 and not more than the $n$,

the j being different from the i,

the ith entry of the value being binary,

the jth entry of the value being non-binary,

a variable of the first vector including the ith entry of a first variable $x_i$ and the jth entry of a first variable $x_j$,

a variable of the second vector including the ith entry of the a second variable $y_i$ and the jth entry of a second variable $y_j$,

the second update including updating the ith entry of the second variable $y_i$ by adding a first function calculated from the ith entry of the first variable $x_i$ and a second function calculated from the ith entry of the first variable $x_i$ to the ith entry of the second variable $y_i$ before the update, and

the second update including updating the jth entry of the second variable $y_j$ by adding the first function calculated from the jth entry of the first variable $x_j$ to the jth entry of the second variable $y_j$ before the update.

Configuration 17

A calculation method causing a processing device to perform a processing procedure,

the processing procedure including a first update of a first vector, a second update of a second vector, and a third update of a third vector,

the first update including updating the first vector using the second vector and the third vector,

the second update including updating the second vector using the first vector, and

the processing device outputting an output of at least one of the first vector obtained after repeating the processing procedure or a function of the first vector obtained after the repeating the processing procedure,

the output including an ith entry of a value and a jth entry of a value,

the i being an integer of not less than 1 and not more than $n$,

the $n$ being an integer of not less than 2,

the j being an integer of not less than 1 and not more than *the n,*

the j being different from the i,

the ith entry of the value being binary,

the jth entry of the value being non-binary,

a variable of the first vector including the ith entry of a first variable $x_i$ and the jth entry of a first variable $x_j$, a variable of the second vector including the ith entry of a second variable $y_i$ and the jth entry of a second variable $y_j$, the second update including updating the ith entry of the second variable $y_i$ by adding a first function calculated from the i-th entry of the first variable $x_i$ and a second function calculated from the ith entry of the first variable $x_i$ to the ith entry of the second variable $y_i$ before the update, and

the second update including updating the jth entry of the second variable $y_j$ by adding the first function calculated from the jth entry of the first variable $x_j$ to the jth entry of the second variable $y_j$ before the update.

According to the embodiment, a calculation device, a calculation program, a recording medium, and a calculation method can be provided, in which an optimization problem can be solved.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in calculation devices such as processing devices, acquisition parts, processing portions, memory portions, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all calculation devices, calculation programs, recording mediums, and calculation methods practicable by an appropriate design modification by one skilled in the art based on the calculation devices, the calculation programs, the recording mediums, and the calculation methods described above as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

**Claims**

1. A calculation device (110), comprising:

    a processing device (70) configured to perform a processing procedure,
    the processing procedure including a first update of a first vector, a second update of a second vector, and a third update of a third vector,
    the first update including updating the first vector using the second vector and the third vector,
    the second update including updating the second vector using the first vector, and
    the processing device being configured to output an output (77O) of at least one of the first vector obtained after repeating the processing procedure or a function of the first vector obtained after the repeating the processing procedure,
    the output including an ith entry of a value and a jth entry of a value,
    the i being an integer of not less than 1 and not more than $n$,
    the $n$ being an integer of not less than 2,
    the j being an integer of not less than 1 and not more than the $n$,
    the j being different from the i,
    the ith entry of the value being binary,
    the jth entry of the value being non-binary,
    a variable of the first vector including the ith entry of a first variable $x_i$ and the jth entry of a first variable $x_j$,
    a variable of the second vector including the ith entry of a second variable $y_i$ and the jth entry of a second variable $y_j$,
    the second update including updating the ith entry of the second variable $y_i$ by adding a first function calculated from the ith entry of the first variable $x_i$ and a second function calculated from the ith entry of the first variable $x_i$ to the ith entry of the second variable $y_i$ before the update, and
    the second update including updating the jth entry of the second variable $y_j$ by adding the first function calculated from the jth entry of the first variable $x_j$ to the jth entry of the second variable $y_j$ before the update.

**2.** The device according to claim 1, wherein

the processing device includes a first controller (74), and the first controller is configured to set the ith entry of the value as a binary value and the jth entry of the value as a non-binary value based on information regarding a calculation condition.

**3.** The device according to claim 1 or 2, wherein

a variable of the third vector includes a qth entry of a third variable $u_q$,

the q is an integer not less than 1 and not more than m, and

the m is an integer not less than 1.

**4.** The device according to claim 3, wherein

the m is a number of a plurality of inequality constraints set for the first vector.

**5.** The device according to any one of claims 1-4, wherein

the processing device includes a processor (70P) and a memory part (70M),

the processor is configured to perform the first update, the second update, and the third update,

the memory part is configured to store the first vector, the second vector, and the third vector,

the processor includes a plurality of processing portions (10P, 20P, 30P),

one of the processing portions is configured to perform a part of the first update, and

an other one of the processing portions is configured to perform an other part of the first update.

**6.** The device according to any one of claims 1-4, wherein

the processing device includes a processor (70P) and a memory part (70M),

the processor is configured to perform the first update, the second update, and the third update,

the memory part is configured to store the first vector, the second vector, and the third vector,

the processor includes a plurality of processing portions (10P, 20P, 30P),

one of the processing portions is configured to perform a part of the second update, and

an other one of the processing portions is configured to perform an other part of the second update.

**7.** The device according to any one of claims 1-4, wherein

the processing device includes a processor (70P) and a memory part (70M),

the processor is configured to perform the first update, the second update, and the third update,

the memory part is configured to store the first vector, the second vector, and the third vector,

the processor includes a plurality of processing portions (10P, 20P, 30P),

one of the processing portions is configured to perform a part of the third update, and

an other one of the processing portions is configured to perform an other part of the third update.

**8.** The device according to any one of claims 1-4, wherein

the memory part includes a plurality of memory portions (10M, 20M, 30M),

a part of the the memory portions is configured to store a part of the first vector,

an other part of the memory portions is configured to store an other part of the first vector,

an other part of the memory portions is configured to store a part of the second vector,

an other part of the memory portions is configured to store an other part of the second vector,

an other part of the memory portions is configured to store a part of the third vector, and

an other part of the memory portions is configured to store an other part of the third vector.

**9.** The device according to any one of claims 1-4, wherein

the processing device includes a processor (70P) and a memory part (70M),

the processor includes

a first processing portion (10P) configured to perform the first update,

a second processing portion (20P) configured to perform the second update,

a third processing portion (30P) configured to perform the third update,

the memory part includes

a first memory portion (10M) configured to store the first vector,
a second memory portion (20M) configured to store the second vector,
a third memory portion (30M) configured to store the third vector,

the first vector before the update stored in the first memory portion is supplied to the first processing portion and the third processing portion,
the second vector before the update stored in the second memory portion is supplied to the second processing portion and the first processing portion,
the third vector before the update stored in the third memory portion is supplied to the third processing portion and the first processing portion,
the first vector after the update output from the first processing portion is supplied to the first memory portion, the second processing portion, and the third processing portion,
the second vector after the update output from the second processing portion is supplied to the second memory portion, and
the third vector after the update output from the third processing portion is supplied to the third memory portion.

10. The device according to any one of claims 1-4, wherein

the processing device includes a processor (70P) and a memory part (70M),
the processor includes

a first processing portion (10P) configured to perform the first update,
a second processing portion (20P) configured to perform the second update,
a third processing portion (30P) configured to perform the third update,

the memory part includes

a first memory portion (10M) configured to store the first vector,
a second memory portion (20M) configured to store the second vector,
a third memory portion (30M) configured to store the third vector,

the first vector before the update stored in the first memory portion is supplied to the first processing portion,
the second vector before the update stored in the second memory portion is supplied to the second processing portion and the first processing portion,
the third vector before the update stored in the third memory portion is supplied to the third processing portion and the first processing portion,
the first vector after the update output from the first processing portion is supplied to the first memory portion, the second processing portion, and the third processing portion,
the second vector after the update output from the second processing portion is supplied to the second memory portion, and
the third vector after the update output from the third processing portion is supplied to the third memory portion.

11. The device according to any one of claims 1-4, wherein

the processing device includes a processor (70P) and a memory part (70M),
the processor includes

a first processing portion (10P) configured to perform the first update,
a second processing portion (20P) configured to perform the second update,
a third processing portion (30P) configured to perform the third update,

the memory part includes

a first memory portion (10M) configured to store the first vector,

a second memory portion (20M) configured to store the second vector,
a third memory portion (30M) configured to store the third vector,

the first vector before the update stored in the first memory portion is supplied to the first processing portion and the second processing portion,
the second vector before the update stored in the second memory portion is supplied to the second processing portion,
the third vector before the update stored in the third memory portion is supplied to the third processing portion and the first processing portion,
the first vector after the update output from the first processing portion is supplied to the first memory portion, and the third processing portion,
the second vector after the update output from the second processing portion is supplied to the second memory portion, and the first processing portion, and
the third vector after the update output from the third processing portion is supplied to the third memory portion.

12. The device according to any one of claims 9-11, wherein

the first processing portion includes a plurality of first processing portions (18),
one of the first processing portions performs a part of the first update,
an other one of the first processing portions performs an other part of the first update, and
at least a part of the other part of the first update is performed at a same time as the part of the first update.

13. A calculation program causing a computer to perform a processing procedure,

the processing procedure including a first update of a first vector, a second update of a second vector, and a third update of a third vector,
the first update including updating the first vector using the second vector and the third vector,
the second update including updating the second vector using the first vector, and
at least one of the first vector obtained after repeating the processing procedure or a function of the first vector obtained after the repeating the processing procedure being output,
the output including an ith entry of a value and a jth entry of a value,
the i being an integer of not less than 1 and not more than $n$,
the $n$ being an integer of not less than 2,
the j being an integer of not less than 1 and not more than the $n$,
the j being different from the i,
the ith entry of the value being binary,
the jth entry of the value being non-binary,
a variable of the first vector including the ith entry of a first variable $x_i$ and the jth entry of a first variable $x_j$,
a variable of the second vector including the ith entry of a second variable $y_i$ and the jth entry of a second variable $y_j$,
the second update including updating the ith entry of the second variable $y_i$ by adding a first function calculated from the ith entry of the first variable $x_i$ and a second function calculated from the ith entry of the first variable $x_i$ to the ith entry of the second variable $y_i$ before the update, and
the second update including updating the jth entry of the second variable $y_j$ by adding the first function calculated from the jth entry of the first variable $x_j$ to the jth entry of the second variable $y_j$ before the update.

14. A recording medium being a computer-readable recording medium that records a calculation program that causes a computer to perform a processing procedure,

the processing procedure including a first update of a first vector, a second update of a second vector, and a third update of a third vector,
the first update including updating the first vector using the second vector and the third vector,
the second update including updating the second vector using the first vector, and
at least one of the first vector obtained after repeating the processing procedure or a function of the first vector obtained after the repeating the processing procedure being output,
the output including an ith entry of a value and a jth entry of a value,
the i being an integer of not less than 1 and not more than $n$,
the $n$ being an integer of not less than 2,
the j being an integer of not less than 1 and not more than the $n$,

the j being different from the i,

the ith entry of the value being binary,

the jth entry of the value being non-binary,

a variable of the first vector including the ith entry of a first variable $x_i$ and the jth entry of a first variable $x_j$,

a variable of the second vector including the ith entry of a second variable $y_i$ and the jth entry of a second variable $y_j$,

the second update including updating the ith entry of the second variable $y_i$ by adding a first function calculated from the ith entry of the first variable $x_i$ and a second function calculated from the ith entry of the first variable $x_i$ to the ith entry of the second variable $y_i$ before the update, and

the second update including updating the jth entry of the second variable $y_j$ by adding the first function calculated from the jth entry of the first variable $x_j$ to the jth entry of the second variable $y_j$ before the update.

**15.** A calculation method causing a processing device (70) to perform a processing procedure,

the processing procedure including a first update of a first vector, a second update of a second vector, and a third update of a third vector,

the first update including updating the first vector using the second vector and the third vector,

the second update including updating the second vector using the first vector, and

the processing device outputting an output (77O) of at least one of the first vector obtained after repeating the processing procedure or a function of the first vector obtained after the repeating the processing procedure,

the output including an ith entry of a value and a jth entry of a value,

the i being an integer of not less than 1 and not more than *n,*

the *n* being an integer of not less than 2,

the j being an integer of not less than 1 and not more than the *n,*

the j being different from the i,

the ith entry of the value being binary,

the jth entry of the value being non-binary,

a variable of the first vector including the ith entry of a first variable $x_i$ and the jth entry of a first variable $x_j$,

a variable of the second vector including the ith entry of a second variable $y_i$ and the jth entry of a second variable $y_j$,

the second update including updating the ith entry of the second variable $y_i$ by adding a first function calculated from the ith entry of the first variable $x_i$ and a second function calculated from the ith entry of the first variable $x_i$ to the ith entry of the second variable $y_i$ before the update, and

the second update including updating the jth entry of the second variable $y_j$ by adding the first function calculated from the jth entry of the first variable $x_j$ to the jth entry of the second variable $y_j$ before the update.

FIG. 1

FIG. 2

FIG. 3

FIG. 4

FIG. 5

FIG. 6

FIG. 7

## FIG. 8A

## FIG. 8B

## FIG. 8C

## FIG. 8D

## FIG. 9A

## FIG. 9B

## FIG. 9C

## FIG. 9D

## FIG. 10A

## FIG. 10B

## FIG. 10C

## FIG. 10D

## FIG. 10E

## FIG. 11A

## FIG. 11B

## FIG. 11C

## FIG. 11D

FIG. 12A

FIG. 12B

FIG. 12C

FIG. 12D

FIG. 13A

FIG. 13B

FIG. 13C

FIG. 13D

FIG. 13E

## FIG. 14A

## FIG. 14B

## FIG. 14C

## FIG. 14D

## FIG. 15A

## FIG. 15B

## FIG. 15C

## FIG. 15D

FIG. 16A

FIG. 16B

FIG. 16C

FIG. 16D

FIG. 16E

FIG. 17

Europäisches
Patentamt

European
Patent Office

Office européen
des brevets

# EUROPEAN SEARCH REPORT

Application Number

EP 22 18 7448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN CHUANGCHUANG ET AL: "Distributed Optimization for Convex Mixed-Integer Programs based on Projected Subgradient Algorithm", 2018 IEEE CONFERENCE ON DECISION AND CONTROL (CDC), IEEE, 17 December 2018 (2018-12-17), pages 2581-2586, XP033504727, DOI: 10.1109/CDC.2018.8618670 [retrieved on 2019-01-18] Algorithm 1; * abstract * | 1-15 | INV. G06F17/11 |

-----

TECHNICAL FIELDS
SEARCHED      (IPC)

G06F

The present search report has been drawn up for all claims

| Place of search | Date of completion of the search | Examiner |
|---|---|---|
| Berlin | 9 May 2023 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)